# EUROPEAN PATENT SPECIFICATION

(11) **EP 2 249 460 B1**
(45) Date of publication and mention of the grant of the patent: **07.03.2012**
(21) Application number: 09006136.7
(22) Date of filing: 05.05.2009
(51) Int. Cl.: H02K 1/27

(54) **Positioning substrate and permanent magnet rotor**
Positionierungssubstrat und Permanentmagnetrotor
Substrat de positionnement et rotor d'aimant permanent

(43) Date of publication of application: 10.11.2010
(73) Proprietor: IRO AB, 523 22 Ulricehamn (SE)
(72) Inventor: Carlsson, Ake, 514 35 Tranemo (SE)
(74) Representative: Grünecker, Kinkeldey, Stockmair & Schwanhäusser

(56) References cited:
- JP-A- 2004 007 937
- JP-A- 2004 260 912

## Description

The invention relates to a positioning substrate according to the preamble part of claim 1.

When assembling a rotor body of the rotor of a permanent magnet motor it is extremely important to fix the respective permanent magnet precisely at a specific position in the slot or pocket and in relation to the geometry of other parts in the permanent magnet motor, e.g. in order to minimise torque ripple effects during operation of the motor, and to achieve high motor efficiency. Known positioning substrates for the at least one permanent magnet need complex and skilled and costly assembly steps, also because the material used in the rotor body as well as the material of the permanent magnet is relatively fragile so that these materials can only be exposed to small mechanical loads, i.e. have to be handled with utmost care.

JP 2004 007937 A discloses a positioning substrate for placing permanent t magnets in respective slots of the rotor of a permanent magnet motor. The positioning substrate is a rectangular drawer and is formed with separated compartments each accommodating a respective permanent magnet. Using the drawer for inserting and placing the permanent magnets in the slot of the rotor allows to achieve an easy assembly and a suppression of occurrence of an eddy current. Fig. 6 discloses to place two drawers each accommodating four permanent magnets behind each other in each slot inside the rotor and such that the front side walls of the drawers are distant from the rear and front end faces of the rotor. The slots are closed behind the drawers.

WO 2007/004009 A discloses a rotor for a permanent magnet motor. The rotor body has four regularly circumferentially distributed longitudinal slots each containing a permanent magnet. The positioning substrate for positioning the permanent magnet in the slot comprises a hairpin-like spring member received in an axially extending groove in the respective lower side of the slot. The spring member presses by form-fit the inserted permanent magnet against the upper inner wall of the slot. In addition, longitudinally extending positioning ribs in the slot safeguard the correct position of the inserted permanent magnet.

JP-A-2000/341920 discloses a permanent magnet motor rotor body having four regularly circumferentially distributed slots each receiving an inserted permanent magnet. The cross-section of the permanent magnet is narrower and thinner than the cross-section of the slot.

The slot is formed with downwardly angled edge regions each containing an inserted positioning substrate. The positioning substrates are coil springs or tubular spring bodies and contact two opposed lower longitudinal edges of the inserted permanent magnet in order to maintain the permanent magnet in a centred position and also to press the top side of the permanent magnet against the upper inner wall of the slot.

WO-A-02/103882 relates to a hood-shaped plastic material container for fixing at least one permanent magnet to the outer periphery of the rotor of a permanent magnet motor. The container has protruding end flanges which are secured at the periphery of the periphery of the rotor body by fixation angle parts and fixation screws. The container can be moulded from plastic material, e.g. polyamide which may be fibre reinforced. The permanent magnet pieces are glued into the container. The container may be extruded, injection moulded or vacuum moulded.

It is an object of the invention to provide a permanent magnet positioning substrate which is comfortable to handle and allows to precisely position at least one permanent magnet in a slot of a permanent magnet motor rotor body, and to provide an easy rotor assembly procedure. It is part of the object of the invention to assemble a permanent magnet motor rotor with a minimum number of parts and assembly steps.

This object is achieved by the features of claim 1.

The at least one permanent magnet is simply inserted into the drawer and then is inserted with the drawer into the slot of the rotor body. The positioning substrate assures a precise positioning of the at least one permanent magnet in the drawer, and in turn a precise positioning of the permanent magnet in the slot of the rotor body without the necessity to use tools or other fixation means. Actually, the positioning substrate needs two assembly steps only, namely to insert the permanent magnet into the drawer and then to insert the drawer into the slot of the rotor body. Inserting the drawer into the slot of the rotor body automatically will result in a proper positioning and fixation of the permanent magnet in the rotor body.

When positioning the at least one permanent magnet by means of the positioning substrate in the slot of the rotor body when assembling the rotor, neither the at least one permanent magnet nor the rotor body is loaded with significant mechanical load. Only two assembly steps suffice to equip one slot of the rotor body with the at least one permanent magnet motor and at the same time to correctly position the at least one permanent magnet in the slot. The relative position between the permanent magnet and the slot is assured after the positioning substrate is correctly inserted and also during the later operation of the permanent magnet motor. The positioning preciseness is high and results in high efficiency and minimised torque ripple effects.

In a preferred embodiment the laterally acting fixation structure integrated in the first and second side walls is an elastic profile extending longitudinally along the outer side of the each side wall, the profile being elastic in a direction substantially perpendicular to the outer side. At least partial regions of lower edges of the first and second side walls remote from the open permanent magnet insertion side of the drawer form guiding and/or supporting surfaces for co-action with a rotor slot wall. Both elastic profiles yield inwardly when the positioning substrate is properly inserted into a rotor slot and centre the at least one permanent magnet precisely within the slot. The guiding and/or supporting surfaces co-act e.g. with the respective lower rotor slot wall in order to position the at least one permanent magnet radially with respect to the axis of the rotor body, preferably so that the upper exposed surface of the at least one permanent magnet is kept in firm mechanical contact with the upper rotor slot wall. The yieldability of the elastic profiles allows to smoothly push the positioning substrate into the slot. The elastic profiles, furthermore, fill the usually provided spaces at both sides of the rotor slot which spaces are provided in the rotor body in order to enhance the magnetic co-operation between the at least one permanent magnet and the rotor body lamellas. The profile may be hollow inside to provide a predetermined elasticity for easily inserting the positioning substrate and reliably positioning the at least one permanent magnet in width direction of the rotor slot. Instead, the elastic profile may be a part of a round or oval tube profile fixed to or integrated into the outer side of the first and second side walls, e.g. with a convexly curved or outwardly protruding outer side.

The elastic profile in another embodiment even may be of solid but yieldable material, e.g. foam material or the like.

In an embodiment of particular importance the elastic profile is an elastic longitudinal lip connected in a continuous or partly interrupted root region to the side wall outer side, the lip having a free lip edge extending substantially parallel to the root region with a distance between the lip edge and the side wall outer side. The lip may have a lip body which is convex or inclined outwardly in a cross-sectional view. The lip guarantees sufficient yieldability and firmly co-acts with the slot wall.

In this embodiment the root region of the lip may be located in close vicinity to one longitudinal edge of the outer side of the side wall. The lip body extends from the root regions substantially in a direction to the other longitudinal edge of the outer side such that the lip edge does not reach the other longitudinal edge of the outer side.

In order to achieve an optimally long co-acting region between the elastic profile and the rotor slot wall one longitudinal end of the profile coincides with one longitudinal end of the outer side of the fourth side wall. The other longitudinal end of the profile is spaced from the other longitudinal end of the outer side of the first and second side walls, preferably is located at the position coinciding with the inner side of the third side wall which interconnects the two opposed first and second side walls. As soon as the positioning substrate is correctly inserted into the rotor slot, the elastic profiles will completely be situated within the slot and will co-act with the slot walls along the entire extension of the slot.

The third or fourth side wall of a further embodiment is formed with at least one rigid stop protruding beyond e.g. the open permanent magnet insertion side and/or the bottom side of the drawer. The stop, preferably, is a convexly curved continuation portion of the third side wall.

In another embodiment the bottom side of the drawer is formed with an opening which is bounded by flanges extending along the first and second side wall inner sides. The flanges, expediently, are connected to the inner sides of three of the four side walls, may define guiding and/or supporting surfaces for co-action with the lower slot wall, and at the same time define resting surfaces for the at least one permanent magnet in the drawer. The width of each flange may substantially equal at least the thickness of the side walls, in order to use a minimum of material and to reduce the weight of the positioning substrate.

In order to also secure the inserted positioning substrate against being pulled out from the rotor slot, the fourth side wall carries at least one snap protrusion at an upper and/or lower side wall edge. The snap protrusion, preferably, is a wedge-shaped snap tooth slightly protruding beyond the upper and/or lower side wall edge. Preferably, the snap tooth is situated in insertion direction of the drawer between the inner and outer sides of the fourth side wall.

The positioning substrate is a one piece injection moulded part, preferably from plastics material e.g. like nylon, or preferably even fibre reinforced plastic material, or is a cast part made of a non-magnetic material, like light metal or light metal alloys. The height measure of the permanent magnet receiving space between the flanges and the upper side wall edges may substantially equal the thickness of the at least one permanent magnet. Owing to the co-action between the lower guiding and/or supporting surfaces at least of the first and second side walls and/or of the flanges with the lower slot wall, the then upper surface of the at least one permanent magnet is held in firm contact with the upper slot wall, while the positioning substrate is fitted into the rotor slot and stably supports the at least one permanent magnet in all directions.

In a preferred embodiment of the rotor one of the longitudinal acting fixation structures, preferably a snap protrusion, is snapped around or behind at least one edge of a mouth of the slot in one axial end face of the rotor body. The positioning substrate is pushed into the slot until the snap protrusion snaps around the edge and hinders that the positioning substrate will be pulled back or moves back inadvertently. Another one of the longitudinally acting fixation structure, preferably a rigid stop of the third side wall, may abut at another axial end face of the rotor body. The stop limits the insertion depth of the positioning substrate which then firmly is positioned in longitudinal direction by the snap protrusion and the rigid stop.

In another embodiment of the rotor two opposed laterally acting fixation structures, namely the flexible profiles at the first and second side wall, abut in elastically deformed condition at opposed inner wall regions of the slot, while at the same time lower guiding and/or supporting surfaces e.g. at the first and second side walls contact the lower slot wall and press the upper surface of the at least one permanent magnet against the upper slot wall.

In an expedient embodiment of the rotor, the permanent magnet is either a single piece of a permanent magnet or a series of permanent magnets secured in place in the positioning substrate, e.g. by gluing or by a snap mechanism. This allows to preassemble each positioning substrate with the correctly positioned at least one permanent magnet before inserting the preassembled sub-unit of the rotor into a respective rotor slot.

Embodiments of the invention will be explained with the help of the drawings. In the drawings is:
- Fig. 1: an exploded perspective view of components needed to manufacture a rotor of a permanent magnet motor,
- Fig. 2: a longitudinal section of an assembled rotor,
- Fig. 3: a view of a positioning substrate as shown in Fig. 1, in viewing direction from the left-hand side,
- Fig. 4: another embodiment of a positioning substrate in the same viewing direction as in Fig. 3, and
- Fig. 5: a sectional view of a detail of the positioning substrate shown in Fig. 1 in a section plane V-V.

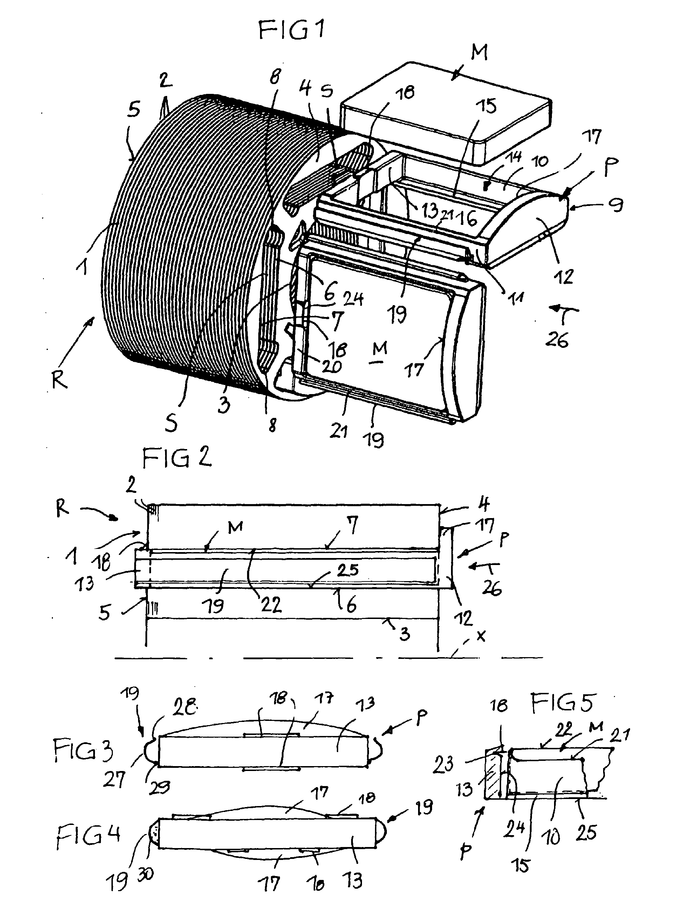

Fig. 1 shows a rotor R e.g. for a permanent magnet motor. The rotor R has a substantially cylindrical rotor body 1 made from laminated parallel lamellas 2. The rotor body has axial end faces 4, 5 and a central shaft bore 3 and a plurality of regularly or irregularly circumferentially distributed slots S between the shaft bore 3 and the outer periphery of the rotor body 1. In the embodiment shown, there are four regularly distributed slots S in a square configuration. Each slot S extends with constant width and constant height between both axial end faces 4, 5 of the rotor body 1. The slots have substantially flat upper slot walls 7 and substantially flat lower slot walls 6 and at both sides symmetric and mirror-inverted cut-outs 8. Each slot serves to receive at least one permanent magnet M. The permanent magnet M may be a single piece of a permanent magnet with a predetermined polarisation or may consist of a series equally or differently polarised magnetic pieces. In the embodiment shown, the permanent magnet M has the shape of a flat block of constant thickness somewhat smaller than the height of a slot S.

The invention provides an auxiliary tool facilitating an easy assembly of the rotor R with respect to the insertion and positioning of the respective at least one permanent magnet M in a slot S by means of a positioning substrate P formed similar to a drawer 9. The positioning substrate P (Fig. 2) can easily be fitted into the slot S such that e.g. the top surface of the at least one permanent magnet M closely faces or even contacts the upper slot wall 7 and such that the at least one permanent magnet M is reliably secured and positioned in the slot S in circumferential and radial directions.

The positioning substrate P has first, second, third and fourth narrow vertical side walls 10, 11, 12 and 13 of substantially equal thickness, an open permanent magnet insertion side on the top side, and a bottom side which in the embodiment shown has an opening 16 bounded by two longitudinally extending flanges 15 which are connected to respective three side wall and define a resting surface for the at least one permanent magnet M. The first and second side walls 10, 11 have at their outer sides longitudinally extending profiles 19 which are elastic at least in a direction perpendicular to the outer side wall sides for lateral co-action with the boundaries of the sideward cut-outs 8 of the slot S.

As shown in Fig. 1, the elastic profile 19 has one longitudinal end (on the left-hand side) coinciding substantially with the outer side of the fourth side wall 13. The other longitudinal end of the elastic profile 19 is set back with respect to the third side wall 12 such that it substantially coincides with the inner side of the third side wall 12.

The third side wall 12 has an integrated rigid stop 17, e.g. an upwardly and convexly rounded continuation portion of the third side wall 12 or the inner side of the third side wall 12, respectively.

The fourth side wall 13 has, e.g. at the top side edge, a snap protrusion 18 protruding somewhat beyond the top edge of the fourth side wall 13. The snap protrusion 18 is e.g. integrated into the fourth side wall 13 and is a snap tooth the edge of which is situated in-between the inner and outer side walls of the fourth side wall 13. The height dimensions of the first and second side walls 10, 11 may be somewhat smaller than the height of the fourth side wall 13, such that the top surface of the inserted permanent magnet M protrudes somewhat beyond the upper edges of the first and second side walls 10, 11. The height of the fourth side wall 13 is so that at least the fourth side 13 fits relatively tightly into the slot. The sides walls 10 to 13 and the flanges 15 define a permanent magnet receiving space 14 with an open upper side. The top edge of the fourth side wall 13 may define a supporting and/or guiding surface 20 for co-action with the upper inner slot wall 7. The fourth side wall 13, as shown, may have a depression 24 at the inner side where the edge of the snap protrusion 18 is situated. The somewhat set-back upper edges of the first and second side walls 10, 11 are indicated at 21 in Fig. 1 (and Fig. 5).

During assembly of the rotor R first the at least one permanent magnet M is inserted into the positioning substrate P and is e.g. secured in place by gluing or by a not shown snap mechanism during a prefabrication stage. Then this prefabricated sub-unit is inserted in the direction of an arrow 26 in the respective slot S with the third side wall 12 trailing, until the snap protrusion 18 snaps behind the axial end face 5 of the rotor body 1 and at the same the stop 17 abuts at the other axial end face 4. This secures the sub-unit axially in place in the slot S with the top surface of the at least one permanent magnet M either directly contacting the upper slot inner wall or lying adjacent to it. The lower edges of the first and second side walls 10, 11 (Fig. 5) may define supporting and/or guiding surfaces 25 resting on the lower inner slot wall 6 for radially positioning the at least one permanent magnet M in the slot S. During insertion of the sub-unit into the slot S the elastic profiles 19 are deformed inwardly, slide along the inner walls of the slot S and finally are maintained in deformed conditions and with preload against the slot inner walls in the cut-outs 8 in order to position the at least one permanent magnet M in lateral direction of the slot S.

Fig. 5 indicates a detail variant with small cut-out 23 below the snap protrusion 18 allowing to more easily deform the snap protrusion 18 while inserting the positioning substrate into the slot S. The top surface of the permanent magnet M is indicated at 22. The recess 24 in the fourth side wall 13 substantially defines the longitudinal position of the snap protrusion 18. The permanent magnet M rests on the flanges 15 and is positioned between all four side walls 11-13.

The final assembled condition of the rotor is shown in Fig. 2. The positioning substrate P protrudes beyond both axial end faces 4, 5 of the rotor body 1, in this embodiment. The elastic profiles 19 are deformed inwardly and are kept under lateral preload.

Fig. 3 shows a rear view of the positioning substrate P of Fig. 1, viewing direction from the left-hand side in Fig. 1). The fourth side wall 13 in this case has upper and lower snap protrusions 18, while the rigid stop 17 only protrudes beyond the upper edge of the third side wall 12. The elastic profile 19 is a lip profile which is secured or integrated into the outer side of the respective first and second side walls at a root region 29 (a continuous or interrupted root region) close to the lower edge of the outer side of the side wall. The profile has a lip body 27 defining an outwardly convex curvature and a free lip edge 28 which, at least in not deformed condition of the elastic profile 19, maintains a distance from the outer side of the respective side wall. In an alternative, not shown embodiment, there may be several longitudinal elastic profiles 19 at the outer side of each first and second side wall.

Fig. 4 shows a rear view similar to the one of Fig. 3 of another embodiment of a positioning substrate P. In this embodiment the fourth side wall 13 has upper and lower snap protrusions 18. Along the outer sides of the first and second side walls elastic profiles 19 are either attached or integrated which are yieldable perpendicular to the respective outer side. Each elastic profile 19 may be part of a round or oval tube fixed at both edges to the outer side or even may be a solid tube profile 30 of resilient material like rubber, elastomeric material, or foam material. Furthermore, the rigid stops 17 are provided at the lower and upper edges of the third side wall 12.

In a not shown alternative embodiment instead of longitudinally continuing elastic profiles 19 several longitudinally distributed elastic protrusions could be provided with interspaces in-between.

The positioning substrate P, expediently, is a one piece injection moulded part from plastic material, e.g. like nylon, or a cast unitary part of non-magnetic material like a light metal or a light metal alloy or the like. The bottom side of the drawer 9 could be closed completely in order to increase the rigidity of the positioning substrate. The first and second side walls 10, 11 even may have markedly smaller height than the third and fourth side walls in order to save weight. Furthermore, all side walls 10 to 13 could contain several openings in order to further save weight, or could even have a grid structure.

## Claims

1. Positioning substrate (P) for positioning at least one permanent magnet (M) in a slot (S) of a slotted rotor (R) of a permanent magnet motor, the positioning substrate (B) being a rectangular drawer (9) consisting of first to fourth narrow vertical side walls (10, 11, 12, 13) and a bottom wall, the side walls bounding an open permanent magnet insertion side and a receiving space of the drawer (9), **characterised in that** the side walls (10-13) of the drawer (9) have integrated drawer fixation structures laterally and longitudinally co-acting with the rotor body (1) for fixing the drawer (9) and the at least one permanent magnet accommodated in the drawer (9) in the slot (S), when the drawer (9) and the at least one permanent magnet (M) are inserted longitudinally in the slot (S) from one axial end face (4) of the rotor body, that the laterally acting fixation structures co-act by a lateral form-fit and/or force-fit with inner slot walls, and that the longitudinally acting fixation structures co-act longitudinally at least with a form-fit with the axial end faces (4, 5) of the rotor body (1).

2. Positioning substrate as in claim 1, **characterised in that** the laterally acting drawer fixation structure is an elastic profile (19) extending longitudinally along an outer side of a respective one of opposed first and second side walls (10, 11), the profile (19) being elastic in a direction substantially perpendicular to the outer side, and that at least partial regions of lower edges of the first and second side walls (10, 11) remote from the open permanent magnet insertion side of the drawer (9) form guiding and/or supporting surfaces (25) of the drawer (9) for co-action with a rotor slot wall (6).

3. Positioning substrate as in claim 2, **characterised in that** the profile (19) is solid and made of elastic material like foam material.

4. Positioning substrate as in claim 2, **characterised in that** the profile (19) is an elastic longitudinal lip connected in a continuous or partially interrupted root region (29) to the side wall outer side, the lip having a free lip edge (28) extending substantially parallel to the root region (29) with a distance between the lip edge (28) and the side wall outer side, and having - in a cross-section - and outwardly convex and/or inclined lip body (27).

5. Positioning substrate as in claim 4, **characterised in that** the root region (29) e.g. is located in close vicinity to one longitudinal edge of the side wall outer side, the lip body (27) extending from the root region (29) substantially in a direction to the other longitudinal edge of the outer side.

6. Positioning substrate as in claim 2, **characterised in that** one longitudinal end of the elastic profile (19) coincides with one longitudinal end of the side wall outer side, and that the other longitudinal end of the elastic profile (19) is spaced apart from the other longitudinal end of the side wall outer side, preferably is located at a position coinciding with the inner side of the third side wall (12) which interconnects the first and second opposed side walls (10, 11 ) having the elastic profiles (19).

7. Positioning substrate as in claim 1, **characterised in that** a longitudinally acting drawer fixation structure is at least one rigid top (17) formed with the third side wall (12). the stop (17) protruding beyond the open permanent magnet insertion side and/or bottom side of the drawer (9), the stop (17), preferably, being a convexly curved upper and/or lower continuation portion of the third side wall (12).

8. Positioning substrate as in claim 1, **characterised in that** the bottom wall of the drawer (9) is formed with an opening (16) which is bounded by flanges (15) extending along the first and second side wall inner sides, the flanges being edge-wise connected to three of the four side walls (10-13).

9. Positioning substrate as in claim 1, **characterised in that** a longitudinally acting drawer fixation structure is at least one snap protrusion (28) carried by the fourth side wall (13) at an upper and/or lower side wall edge, preferably, a wedge-shaped snap tooth slightly protruding between the inner and outer side of the fourth side wall (13) beyond the upper and/or lower side wall edge.

10. Positioning substrate as in at least one of the preceding claims, **characterised in that** the drawer (9) is a one piece injection moulded part, preferably from plastic material, preferably from fibre reinforced plastic material.

11. Positioning substrate as in at least one of the preceding claims 1 to 10, **characterised in that** the drawer (9) is a one piece cast part made of a non-magnetic material like light metal or a light metal alloy.

12. Rotor (R) for a permanent magnet motor, the rotor (R) having a rotor body (1) consisting of laminated rotor lamellas (2), a central rotor shaft bore (3), and a plurality of circumferentially spaced apart slots (S) between the shaft bore (3) and an outer rotor periphery, each slot (S) extending with inner slot walls parallel to the axis of the shaft bore (3) from one axial end face (4) of the rotor body (1) to an opposite axial end face (5), **characterised in that** the rotor accommodates at least one permanent magnet (M) positioned in the slot (S) in an inserted permanent magnet receiving and positioning substrate (P) according to claim 1.

13. Rotor as in claim 12, **characterised in that** one of the longitudinally acting fixation structures, preferably at least one snap protrusion (28) of the drawer (9), is snapped around at least one edge of the mouth of the slot (S) in one axial end face (5) of the rotor body (1), and that another of the longitudinally acting fixation structures, preferably a rigid stop (27) of the drawer (9), abuts at the opposite axial end face (4) of the rotor body (1).

14. Rotor as in claim 12, **characterised in that** two opposed laterally acting fixation structures abut in elastically deformed preloaded condition at opposed inner slot walls of the rotor body (1).

15. Rotor as in claim 12, **characterised in that** the permanent magnet (M) or a series of permanent magnets (M) is secured in the receiving space of the drawer (9) by gluing or by a snap mechanism.

## Patentansprüche

1. Positionierungssubstrat (P) zum Positionieren zumindest eines Permanentmagneten (M) in einem Schlitz (S) eines geschlitzten Rotors (R) eines Permanentmagnetmotors, wobei das Positionierungssubstrat (P) eine viereckige Schublade (9) aus ersten bis vierten schmalen vertikalen Seitenwänden (10, 11, 12, 13) und einer Bodenwand ist, deren Seitenwände eine offene Permanentmagnet-Einsetzseite und einen Aufnahmeraum der Schublade (9) begrenzen, **dadurch gekennzeichnet, dass** die Seitenwände (10 bis 13) der Schublade (9) integrierte Schubladen-Fixierungsstrukturen aufweisen, die zum Fixieren der Schublade (9) und des zumindest einen, in der Schublade (9) untergebrachten Permanentmagneten in dem Schlitz (S) mit dem Rotorkörper (1) quer und längs zusammenwirken, wenn die Schublade (9) und der zumindest eine Permanentmagnet (M) von einer axialen Endfläche (4) des Rotorkörpers in Längsrichtung in den Schlitz (S) eingesetzt sind, dass die quer wirkenden Fixierungsstrukturen mit inneren Schlitzwänden durch einen Querformschluss und/oder Querkraftschluss zusammenwirken, und dass die längs wirkenden Fixierungsstrukturen in Längsrichtung zumindest mit einem Formschluss mit axialen Endflächen (4, 5) des Rotorkörpers (1) zusammenwirken.

2. Positionierungssubstrat gemäß Anspruch 1, **dadurch gekennzeichnet, dass** die quer wirkende Schubladen-Fixierungsstruktur ein elastisches Profil (19) ist, das sich in Längsrichtung entlang einer äußeren Seite einer jeweiligen von sich gegenüberliegenden ersten und zweiten Seitenwänden (10, 11) erstreckt, wobei das Profil (19) in einer Richtung substantiell senkrecht zu der äußeren Seite elastisch ist, und dass zumindest Teilbereiche von unteren Rändern der ersten und zweiten Seitenwände (10, 11), welche der offenen Permanentmagnet-Einsetzseite der Schublade (9) abgewandt sind, Führungs- und/oder Stützflächen (25) der Schublade (9) zur Zusammenwirkung mit einer Rotorschlitzwand (6) bilden.

3. Positionierungssubstrat gemäß Anspruch 2, **dadurch gekennzeichnet, dass** das Profil (19) massiv ist und aus einem elastischen Material wie einem Schaummaterial hergestellt ist.

4. Positionierungssubstrat gemäß Anspruch 2, **dadurch gekennzeichnet, dass** das Profil (19) eine elastische, längs verlaufende Lippe ist, die mit der äußeren Seite der Seitenwand in einer kontinuierlichen oder teilweise unterbrochenen Wurzelregion (29) verbunden ist, wobei die Lippe einen freien Lippenrand (28) besitzt, welcher sich substantiell parallel zur Wurzelregion (29) mit einem Abstand zwischen dem Lippenrand (28) und der äußeren Seite der Seitenwand erstreckt, und - in einem Querschnitt - einen nach außen konvexen und/oder schräg geneigten Lippenkörper (27) aufweist.

5. Positionierungssubstrat gemäß Anspruch 4, **dadurch gekennzeichnet, dass** die Wurzelregion (29) beispielsweise in enger Nachbarschaft zu einem Längsrand der äußeren Seite der Seitenwand angeordnet ist, wobei sich der Lippenkörper (27) von der Wurzelregion 829) substantiell in einer Richtung zu dem anderen Längsrand der äußeren Seite erstreckt.

6. Positionierungssubstrat gemäß Anspruch 2, **dadurch gekennzeichnet, dass** ein Längsende des elastischen Profils (19) mit einem Längsende der äußeren Seite der Seitenwand übereinstimmt, und dass das andere Längsende des elastischen Profils (19) von dem anderen Längsende der äußeren Seite der Seitenwand beabstandet ist, vorzugsweise an einer Position angeordnet ist, die übereinstimmt mit der inneren Seite der dritten Seitenwand (12), welche die ersten und zweiten, sich gegenüberliegenden und die elastischen Profile (19) aufweisenden Seitenwände (10, 11) miteinander verbindet.

7. Positionierungssubstrat gemäß Anspruch 1, **dadurch gekennzeichnet, dass** eine in Längsrichtung wirkende Schubladen-Fixierungsstruktur zumindest ein starrer Anschlag (17) ist, der mit der dritten Seitenwand (12) ausgebildet ist und über die offene Permanentmagnet-Einsetzseite und/oder Bodenseite der Schublade (9) vorsteht, wobei der Anschlag (17), vorzugsweise, ein konvex gerundeter oberer und/oder unterer Fortsetzungsbereich der dritten Seitenwand (12) ist.

8. Positionierungssubstrat gemäß Anspruch 1, **dadurch gekennzeichnet, dass** die Bodenwand der Schublade (9) mit einer Öffnung (16) ausgebildet ist, welche durch Flansche (15) begrenzt wird, die sich entlang der inneren Seiten der ersten und zweiten Seitenwände erstrecken, wobei die Flansche randseitig mit drei der vier Seitenwände (10 bis 13) verbunden sind.

9. Positionierungssubstrat gemäß Anspruch 1, **dadurch gekennzeichnet, dass** eine in Längsrichtung wirkende Schubladen-Fixierungsstruktur zumindest ein Schnappvorsprung (28) ist, der von der vierten Seitenwand (13) an einem oberen und/oder unteren Seitenwandrand getragen wird, vorzugsweise ein keilförmiger Schnappzahn ist, der zwischen der inneren und äußeren Seite der vierten Seitenwand (13) über den oberen und/oder unteren Seitenwandrand geringfügig vorsteht.

10. Positionierungssubstrat gemäß zumindest einem der vorhergehenden Ansprüche, **dadurch gekennzeichnet, dass** die Schublade (9) ein einstückiger Spritzgussteil ist, vorzugsweise aus Kunststoffmaterial, vorzugsweise aus faserverstärktem Kunststoffmaterial.

11. Positionierungssubstrat gemäß zumindest einem der vorhergehenden Ansprüche 1 bis 10, **dadurch gekennzeichnet, dass** die Schublade (9) ein einstückiger Gussteil ist, der aus einem nicht-magnetischen Material, wie Leichtmetall oder einer Leichtmetalllegierung, hergestellt ist.

12. Rotor (R) für einen Permanentmagnetmotor, wobei der Rotor (R) einen Rotorkörper (1) aufweist, der laminierte Rotorlamellen (2), eine zentrale Rotorwellenbohrung (3), und eine Vielzahl in Umfangsrichtung beabstandeter Schlitze (S) zwischen der Rotorwellenbohrung (3) und einer äußeren Rotorperipherie umfasst, wobei sich jeder Schlitz (S) mit inneren Schlitzwänden parallel zur Achse der Rotorwellenbohrung (3) von einer axialen Endfläche (4) zu einer gegenüberliegenden axialen Endfläche (5) des Rotorkörpers (1) erstreckt, **dadurch gekennzeichnet, dass** der Rotor (R) zumindest einen Permanentmagneten (M) aufnimmt, der in dem Schlitz (S) in einem eingesetzten Permanentmagneten-Aufnahme- und Positionierungssubstrat (P) gemäß Anspruch 1 positioniert ist.

13. Rotor gemäß Anspruch 12, **dadurch gekennzeichnet, dass** eine von in Längsrichtung wirkenden Fixierungsstrukturen der Schublade (9), vorzugsweise zumindest ein Schnappvorsprung (28), um zumindest einen Rand der Mündung des Schlitzes (S) in einer axialen Endfläche (5) des Rotorkörpers (1) herum geschnappt ist, und dass eine andere der in Längsrichtung wirkenden Fixierungsstrukturen der Schublade (9), vorzugsweise ein starrer Anschlag (27), an der gegenüberliegenden axialen Endfläche (4) des Rotorkörpers (1) anliegt.

14. Rotor gemäß Anspruch 12, **dadurch gekennzeichnet, dass** zwei einander gegenüberliegende, in Querrichtung wirkende Fixierungsstrukturen an einander gegenüberliegenden inneren Schlitzwänden des Rotorkörpers (1) in elastisch deformierter und vorgespannter Kondition anliegen.

15. Rotor gemäß Anspruch 12, **dadurch gekennzeichnet, dass** der Permanentmagnet (M) oder eine Serie von Permanentmagneten (M) in dem Aufnahmeraum der Schublade (9) durch eine Klebung oder durch einen Schnappmechanismus festgelegt ist.

## Revendications

1. Substrat de positionnement (P) permettant de positionner au moins un aimant permanent (M) dans une fente (S) d'un rotor (R) fendu d'un moteur d'aimant permanent, le substrat de positionnement (B) étant un tiroir (9) rectangulaire consistant en des première à quatrième parois latérales verticales étroites (10, 11, 12, 13) et une paroi de fond, les parois latérales délimitant un côté d'insertion d'aimant permanent ouvert et un espace de réception du tiroir (9), **caractérisé en ce que** les parois latérales (10 à 13) du tiroir (9) présentant des structures de fixation de tiroir intégrées agissant conjointement latéralement et longitudinalement avec le corps de rotor (1) afin de fixer le tiroir (9) et l'aimant permanent logé dans le tiroir (9) dans la fente (S), quand le tiroir (9) et l'aimant permanent (M) sont insérés longitudinalement dans la fente (S) à partir d'une face d'extrémité axiale (4) du corps de rotor, **en ce que** les structures de fixation agissant latéralement agissent conjointement par un ajustement de forme et/ou un ajustement par la force avec les parois de fente internes, et **en ce que** les structures de fixation agissant longitudinalement agissent conjointement longitudinalement au moins avec un ajustement de forme avec les faces d'extrémité axiales (4, 5) du corps de rotor (1).

2. Substrat de positionnement selon la revendication 1, **caractérisé en ce que** la structure de fixation de tiroir agissant latéralement est un profilé élastique (19) s'étendant longitudinalement le long d'un côté externe de l'une respective des première et deuxième parois latérales (10, 11) opposées, le profilé (19) étant élastique dans une direction sensiblement perpendiculaire au côté externe, et **en ce qu'**au moins des régions partielles de bords inférieurs des première et deuxième parois latérales (10, 11) éloignées du côté d'insertion d'aimant permanent ouvert du tiroir (9) forment des surfaces de guidage et/ou de support (25) du tiroir (9) permettant d'agir conjointement avec une paroi de fente de rotor (6).

3. Substrat de positionnement selon la revendication 2, **caractérisé en ce que** le profilé (19) est solide et constitué d'un matériau élastique tel qu'un matériau alvéolaire.

4. Substrat de positionnement selon la revendication 2, **caractérisé en ce que** le profilé (19) est une lèvre longitudinale élastique raccordée dans une région d'origine (29) continue ou partiellement interrompue au côté externe de paroi latérale, la lèvre comportant un bord de lèvre libre (28) s'étendant sensiblement parallèlement à la région d'origine (29) avec une distance entre le bord de lèvre (28) et le côté externe de paroi latérale, et comportant - dans une section en coupe - un corps de lèvre convexe vers l'extérieur et/ou incliné (27).

5. Substrat de positionnement selon la revendication 4, **caractérisé en ce que** la région d'origine (29) est par exemple située à proximité immédiate d'un bord longitudinal du côté externe de paroi latérale, le corps de lèvre (27) s'étendant de la région d'origine (29) sensiblement dans une direction vers l'autre bord longitudinal du côté externe.

6. Substrat de positionnement selon la revendication 2, **caractérisé en ce qu'**une extrémité longitudinale du profilé élastique (19) coïncide avec une extrémité longitudinale du côté externe de paroi latérale, et **en ce que** l'autre extrémité longitudinale du profilé élastique (19) est espacée de l'autre extrémité longitudinale du côté externe de paroi latérale, de préférence est située à une position coïncidant avec le côté interne de la troisième paroi latérale (12) qui raccorde entre elles les première et deuxième parois latérales (10, 11) opposées comportant les profilés élastiques (19).

7. Substrat de positionnement selon la revendication 1, **caractérisé en ce qu'**une structure de fixation de tiroir agissant longitudinalement est au moins une butée rigide (17) formée avec la troisième paroi latérale (12), la butée (17) étant en saillie au-delà du côté d'insertion d'aimant permanent ouvert et/ou du côté de fond du tiroir (9), la butée (17), étant, de préférence, une portion de continuité supérieure et/ou inférieure incurvée de manière convexe de la troisième paroi latérale (12).

8. Substrat de positionnement selon la revendication 1, **caractérisé en ce que** la paroi de fond du tiroir (9) est formée avec une ouverture (16) qui est limitée par des rebords (15) s'étendant le long des côtés internes des première et deuxième parois latérales, les rebords étant raccordées par les bords à trois des quatre parois latérales (10 à 13).

9. Substrat de positionnement selon la revendication 1, **caractérisé en ce qu'**une structure de fixation de tiroir agissant longitudinalement est au moins une saillie à emboîtement (28) supportée par la quatrième paroi latérale (13) au niveau d'un bord de paroi latérale supérieur et/ou inférieur, de préférence, une dent à emboîtement en forme de coin faisant légèrement saillie entre les côtés interne et externe de la quatrième paroi latérale (13) au-delà du bord de paroi latérale supérieur et/ou inférieur.

10. Substrat de positionnement selon au moins l'une des revendications précédentes, **caractérisé en ce que** le tiroir (9) est une partie moulée par injection en une pièce, de préférence d'une matière plastique, de préférence d'une matière plastique renforcée par des fibres.

11. Substrat de positionnement selon au moins l'une quelconque des revendications précédentes 1 à 10, **caractérisé en ce que** le tiroir (9) est une partie de coulage en une pièce constitué d'un matériau non magnétique tel qu'un métal léger ou qu'un alliage de métal léger.

12. Rotor (R) pour un moteur à aimant permanent, le rotor (R) ayant un corps de rotor (1) consistant en des lames de rotor stratifiées (2), un alésage d'arbre (3) de rotor central, et une pluralité de fentes espacées circonférentiellement (S) entre l'alésage d'arbre (3) et une périphérie de rotor externe, chaque fente (S) s'étendant avec des parois de fente internes parallèles à l'axe de l'alésage d'arbre (3) depuis une face d'extrémité axiale (4) du corps de rotor (1) à une face d'extrémité axiale opposée (5), **caractérisé en ce que** le rotor loge au moins un aimant permanent (M) positionné dans la fente (S) dans un substrat de réception et de positionnement d'aimant permanent inséré (P) selon la revendication 1.

13. Rotor selon la revendication 12, **caractérisé en ce qu'**une des structures de fixation agissant longitudinalement, de préférence au moins une saillie d'emboîtement (28) du tiroir (9), est emboîtée autour d'au moins un bord de l'embouchure de la fente (S) dans une face d'extrémité axiale (5) du corps de rotor (1), et **en ce qu'**une autre des structures de fixation agissant longitudinalement, de préférence une butée rigide (27) du tiroir (9), bute au niveau de la face d'extrémité axiale (4) opposée du corps de rotor (1).

14. Rotor selon la revendication 12, **caractérisé en ce que** deux structures de fixation agissant latéralement opposées butent dans un état préchargé élastiquement déformé au niveau de parois de fente internes opposées du corps de rotor (1).

15. Rotor selon la revendication 12, **caractérisé en ce que** l'aimant permanent (M) ou une série d'aimants permanents (M) est fixée dans l'espace de réception du tiroir (9) par collage ou par un mécanisme d'emboîtement.
